# EUROPEAN PATENT APPLICATION

(11) **EP 4 837 860 A1**
(43) Date of publication of application: **11.11.2026**
(21) Application number: 24915658.9
(22) Date of filing: 09.08.2024
(51) Int. Cl.: B65G 1/04

(54) **AUTOMATED WAREHOUSE**

(30) Priority: 05.01.2024 JP 2024000570
(71) Applicant: Murata Machinery, Ltd., Kyoto-shi, Kyoto 601-8326 (JP)
(72) Inventor: WAKIZAKA Michinobu, Kyoto-shi, Kyoto 612-8686 (JP)
(74) Representative: Stöckeler, Ferdinand
(86) International application number: PCT/JP2024/028728
(87) International publication number: WO 2025/146734

(57) **Abstract**

An automated warehouse capable of shortening an overall length of roller conveyors that convey two articles on a lift platform is provided. An automated warehouse 1 according to the present invention includes a rack 2 having a plurality of shelf levels 14, transport vehicles 4, and lift transfer apparatuses 10 and 12 for transferring an article W to and from each shelf level with or without buffer conveyors 24 and 38 interposed, each lift transfer apparatus includes a lift platform 20 or 30, the lift platform includes a first roller conveyor 34 and a second roller conveyor 36 and is capable of accommodating two articles on the lift platform, the first roller conveyor 34 includes at least a first roller 52, the second roller conveyor 36 includes at least a second roller 54 having a diameter larger than the diameter of the first roller or having a frictional force larger than the frictional force of the first roller, the first roller 52 is disposed at least on a downstream side of the first roller conveyor 34, and the second roller 54 is disposed at least on an upstream side of the second roller conveyor 36.

## Description

### Technical Field

The present invention relates to an automated warehouse and particularly to an automated warehouse including a rack having a plurality of shelf levels, transport vehicles each configured to move along one of the shelf levels in the rack, and a lift transfer apparatus for transferring an article to and from each shelf level.

### Background Art

Patent Literature 1 discloses an automated warehouse in which a conveyor on a lift platform conveys two articles.

Patent Literature 2 discloses an automated warehouse in which a conveyor on a lift platform conveys a plurality of articles.

### Citation List

### Patent Literature

Patent Literature 1: Japanese Patent Laid-Open No. 2022-094210
Patent Literature 2: Japanese Patent Laid-Open No. 2021-187625

### Summary of Invention

### Technical Problem

Conventionally, there has been a demand to reduce a lifting load of a lift platform that moves up and down in the vertical direction. The present inventor has focused on a fact that the lifting load can be reduced by shortening an overall length (conveyor length) of a conveyor provided on the lift platform and configured to convey an article.

In a roller conveyor driven by a motor, an article flows downstream by inertia even after a roller is stopped to stop the article due to the conveying speed, the conveying weight, and the like of the article, and thus it has been necessary to secure an allowance length corresponding to the flow. In particular, in a roller conveyor on a lift platform, it is difficult to shorten its overall length since the allowance length is secured. To address this problem, it is conceivable to perform deceleration control of an article by using a deceleration sensor or the like such that the allowance length corresponding to the flow is reduced and the conveyor overall length is shortened; however, in a conveyor (referred to as twin vertical conveyors) that conveys two articles, an upstream roller conveyor and a downstream roller conveyor do not operate in coordination, and as a result, deceleration-stop control cannot be performed by using a deceleration sensor or the like.

Thus, an object of the present invention, which has been made to solve the above-described problem, is to provide an automated warehouse capable of shortening an overall length of a roller conveyor that conveys two articles on a lift platform.

### Solution to Problem

To achieve the above-described object, the present invention provides an automated warehouse including a rack having a plurality of shelf levels, transport vehicles each configured to move along one of the shelf levels in the rack, and a lift transfer apparatus for transferring an article to and from each shelf level, the lift transfer apparatus includes a lift platform configured to move up and down, the lift platform includes an upstream roller conveyor disposed on an upstream side in a conveying direction of the article and a downstream roller conveyor disposed on a downstream side in the conveying direction of the article, and is capable of accommodating two articles on the lift platform, the upstream roller conveyor includes a first roller, the downstream roller conveyor includes a second roller having a diameter larger than the diameter of the first roller or having a frictional force larger than the frictional force of the first roller, the first roller is disposed at least on a downstream side of the upstream roller conveyor, and the second roller is disposed at least on an upstream side of the downstream roller conveyor.

According to the present invention thus configured, even when a rear end portion of an article conveyed to the downstream roller conveyor rests on the first roller (disposed on the downstream side of the upstream roller conveyor) of the upstream roller conveyor, the downstream roller conveyor does not interfere with the article since the first roller has a relatively small diameter or a relatively small frictional force, and the article can be reliably positioned since the second roller of the downstream roller conveyor has a relatively large diameter or a relatively large frictional force (for example, deceleration-stop control is possible by the second roller). Thus, due to an action of the first roller of the upstream roller conveyor and an action of the second roller of the downstream roller conveyor, a predetermined allowance length (allowance length corresponding to article flow) that is conventionally set in the article conveying direction can be minimized. As a result, the overall length of the roller conveyors that convey two articles on the lift platform can be shortened. In addition, the weight of the lift platform can be reduced by an amount corresponding to the shortening of the overall length.

In the present invention, it is preferable that the upstream roller conveyor and the downstream roller conveyor each include the first roller and the second roller having a diameter larger than the diameter of the first roller or having a frictional force larger than the frictional force of the first roller, and the upstream roller conveyor and the downstream roller conveyor each have the first roller disposed on the downstream side and the second roller disposed on the upstream side.

According to the present invention thus configured, influence of an article conveyed into the lift platform or an article conveyed out of the lift platform, on inbound and outbound transfer operation can be minimized.

In the present invention, it is preferable that the upstream roller conveyor and the downstream roller conveyor each include a deceleration sensor for decreasing a conveying speed of an article conveyed by the upstream roller conveyor and the downstream roller conveyor, and a stop sensor for stopping the article having the conveying speed decreased.

According to the present invention thus configured, in addition to an action of the first roller of the upstream roller conveyor and an action of the second roller of the downstream roller conveyor, deceleration-stop control of an article by the deceleration sensor and the stop sensor can be performed to reliably position the article, and accordingly, a predetermined allowance length (allowance length corresponding to article flow) that is conventionally set in the article conveying direction can be more reliably minimized.

In the present invention, it is preferable that the downstream roller conveyor includes at least a deceleration sensor for decelerating an article conveyed by the downstream roller conveyor, and the position of the deceleration sensor and arrangement of the first roller and the second roller be set such that, in a side view, a distance from a position at which the deceleration sensor is provided in the downstream roller conveyor to a boundary position between the first roller and the second roller in the upstream roller conveyor is greater than a preset maximum length of an article in the conveying direction.

According to the present invention thus configured, since the maximum length of a conveyed article is less than the distance from the position of the deceleration sensor of the downstream roller conveyor to the boundary position between the first roller and the second roller of the upstream roller conveyor, a rear end portion of the article conveyed by the downstream roller conveyor when starting to be decelerated by the deceleration sensor rests on the first roller having a relatively small diameter or a relatively small frictional force in the upstream roller conveyor, so that interference of the upstream roller conveyor with the article can be suppressed. Thus, deceleration-stop control of the article by the deceleration sensor can be performed more accurately and more reliably in the downstream roller conveyor.

In the present invention, it is preferable that the lift transfer apparatus includes an inbound lift transfer apparatus for transferring an article to each shelf level of the rack, and an outbound lift transfer apparatus for transferring an article from each shelf level of the rack; in the inbound lift transfer apparatus, the upstream roller conveyor be disposed on a side farther from the rack, and the downstream roller conveyor be disposed on a side closer to the rack; in the outbound lift transfer apparatus, the upstream roller conveyor be disposed on a side closer to the rack, and the downstream roller conveyor be disposed on a side farther from the rack; and in the inbound lift transfer apparatus and the outbound lift transfer apparatus, the upstream roller conveyor and the downstream roller conveyor each have the first roller disposed on the downstream side and the second roller disposed on the upstream side.

According to the present invention thus configured, the lift transfer apparatuses having the same structure can be used for both inbound and outbound. For example, roller conveyor assemblies having the same structure and constituting an upstream or downstream roller conveyor can be used as the upstream roller conveyor and the downstream roller conveyor as appropriate.

### Advantageous Effects of Invention

According to the present invention, it is possible to shorten an overall length of roller conveyors that convey two articles on a lift platform.

### Brief Description of Drawings

[Figure 1] Figure 1 is a side view illustrating a schematic configuration of an automated warehouse according to an embodiment of the present invention.
[Figure 2] Figure 2 is a plan view partially illustrating a schematic configuration of the automated warehouse according to the embodiment of the present invention.
[Figure 3] Figure 3 is a side view illustrating schematic configurations of an upstream roller conveyor and a downstream roller conveyor in a lift platform of a lift transfer apparatus according to the present embodiment.
[Figure 4] Figure 4 is a plan view illustrating schematic configurations of the upstream roller conveyor and the downstream roller conveyor in a lift platform of the lift transfer apparatus according to the present embodiment.
[Figure 5] Figure 5 is a plan view illustrating schematic configurations of the upstream roller conveyor and the downstream roller conveyor in a lift platform of the lift transfer apparatus according to a modification of the present embodiment.
[Figure 6] Figure 6 is a diagram for description of effects of a lift platform of the lift transfer apparatus according to the present embodiment: (A) of Figure 6 is a side view illustrating a schematic configuration of a lift platform of the lift transfer apparatus according to the present embodiment; and (B) of Figure 6 is a side view illustrating a schematic configuration of a lift platform according to a conventional technology of a comparative example.

### Description of Embodiments

An automated warehouse according to an embodiment of the present invention will be described below with reference to the accompanying drawings.

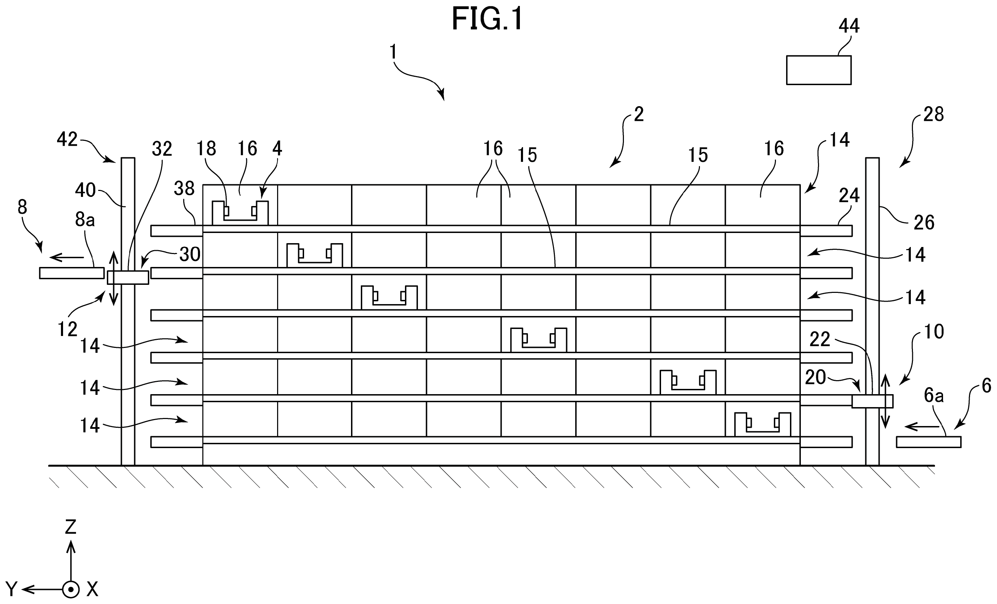

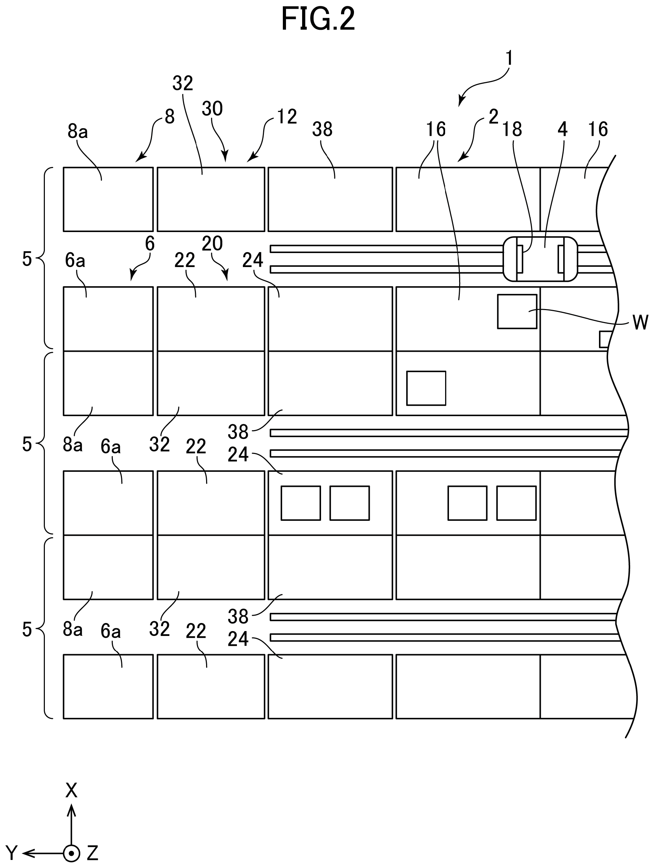

First, the entire configuration of the automated warehouse according to the embodiment of the present invention will be described with reference to Figures 1 and 2. Figure 1 is a side view illustrating a schematic configuration of the automated warehouse according to the embodiment of the present invention, and Figure 2 is a plan view partially illustrating a schematic configuration of the automated warehouse according to the embodiment of the present invention.

Note that, in the following description, in each drawing, a direction indicated by arrow Y is a basic conveying direction of an article, a direction indicated by arrow X is a width direction of an automated warehouse and a conveyor orthogonal to a conveying direction Y, and a direction indicated by arrow Z is a vertical direction.

As illustrated in Figure 1, an automated warehouse 1 according to the present embodiment includes a pair of racks 2, a plurality of transport vehicles 4 (hereinafter simply referred to as "vehicles"), inbound stations 6, outbound stations 8, inbound lift transfer apparatuses 10, and outbound lift transfer apparatuses 12. As illustrated in Figure 2, the pair of racks 2 and the vehicles 4 constitute a unit 5, and the automated warehouse 1 includes a plurality of units 5.

As illustrated in Figure 1, an article W is conveyed from an inbound conveyor (not illustrated) to the inbound stations 6, and is conveyed to each unit 5 (refer to Figure 2) through the inbound lift transfer apparatuses 10. Articles W in each unit 5 are conveyed from the outbound stations 8 to an outbound conveyor (not illustrated) through the outbound lift transfer apparatuses 12. The destination of the outbound conveyor is, for example, a sorting area in which articles W are collected for each shipping destination and shipped by a truck or the like, or a picking area in which products are picked from articles W.

Note that, in Figure 1, for convenience of description, inbound-side devices such as the inbound stations 6 and the inbound lift transfer apparatuses 10 are illustrated on one side of the automated warehouse 1, and outbound-side devices such as the outbound stations 8 and the outbound lift transfer apparatuses 12 are illustrated on the other side of the automated warehouse 1, but as illustrated in Figure 2, a plurality of inbound-side devices such as the inbound lift transfer apparatuses 10 and a plurality of outbound-side devices such as the outbound lift transfer apparatuses 12 are disposed such that they are adjacent to each other in the X direction of the automated warehouse 1.

Subsequently, the racks 2 will be described below.

As illustrated in Figure 1, each rack 2 has a plurality of shelf levels 14, and an article is stored in each shelf level 14 or an article stored in each shelf level 14 is retrieved. Each shelf level 14 of the rack 2 extends in the Y direction and has a plurality of bays 16 in the Y direction. The bays 16 are units of the shelf level 14 on which articles W are placed, and have the same length in the Y direction. The shelf levels 14 are disposed on both sides of the vehicles 4 and rails 15 in the X direction.

Each bay 16 has such a size that a plurality of articles W can be housed therein. Note that the bays 16 may be separate components or integrated, and a plurality of bays 16 can be formed in a shelf level 14 by, for example, appropriately partitioning one shelf plate constituting the shelf level 14. An article W is a case, a tray, a cardboard box, a foldable container, or the like and houses, for example, a product.

The vehicles 4 will be described next.

As illustrated in Figures 1 and 2, the plurality of vehicles 4 (example of inbound-outbound vehicles) are shuttle vehicles, and each reciprocates on rails 15 linearly extending in the Y direction at a height corresponding to a shelf level 14. Each vehicle 4 conveys, for example, one article W. Each vehicle 4 includes a transfer device 18 and is capable of transferring an article W to and from a bay 16 of a corresponding shelf level 14. The transfer device 18 is, for example, a rear-hook type. Note that the transfer device is not limited to a rear-hook type, and may be a device of another type.

The lift transfer apparatuses 10 and 12 will be described next.

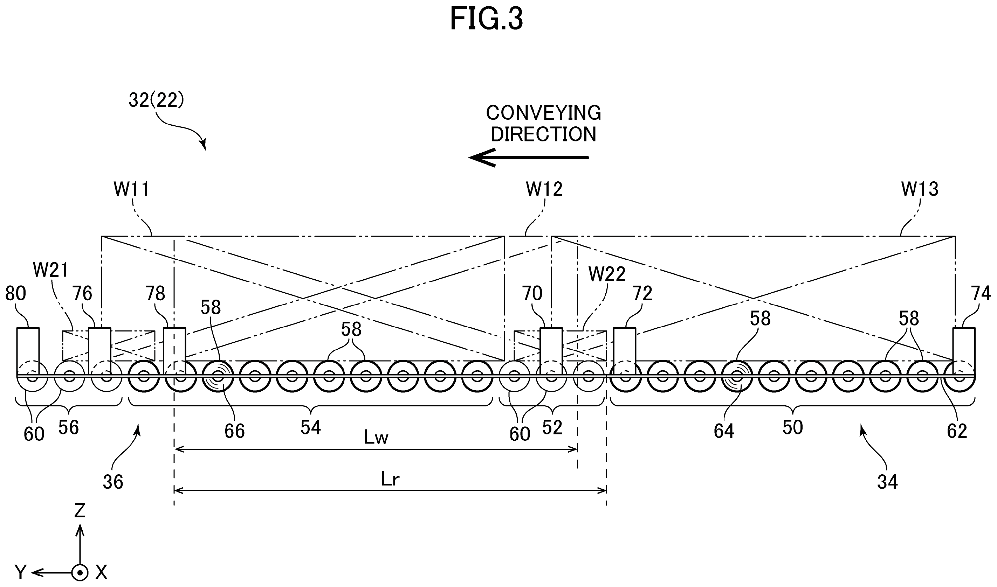

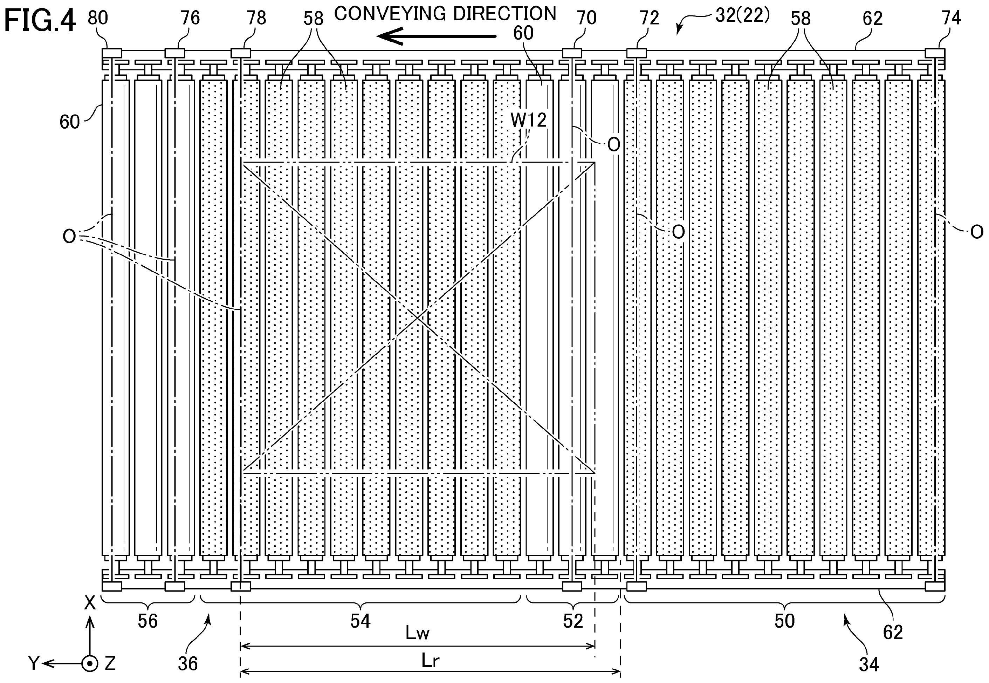

As illustrated in Figure 1, each inbound lift transfer apparatus 10 includes a lift platform 20 disposed between a rack 2 and an inbound station 6. In the present embodiment, the lift platform 20 includes a lift platform conveyor 22 capable of accommodating two articles W arranged in the conveying direction (Y direction). The lift platform conveyor 22 according to the present embodiment is a so-called roller conveyor and includes a first roller conveyor (upstream roller conveyor) 34 and a second roller conveyor (downstream roller conveyor) 36 as illustrated in Figures 3 and 4 to be described later. By such a lift platform conveyor 22, an article W is transferred between the inbound station 6 and an inbound conveyor 24 to be described later.

Each inbound lift transfer apparatus 10 includes a well-known lift mechanism 28 that moves the lift platform 20 up and down along a support 26 and stops the lift platform 20 at a shelf position of any one of the plurality of shelf levels 14. In each shelf level 14, the inbound conveyor 24 is provided at a portion adjacent to the inbound lift transfer apparatus 10 in the Y direction. Thus, an article W is transferred by operating both the lift platform conveyor 22 and the inbound conveyor 24 in coordination. Note that the inbound conveyor 24 functions as a buffer conveyor for storing an article. The inbound conveyor 24 is, for example, a belt conveyor.

As illustrated in Figures 1 and 2, each outbound lift transfer apparatus 12 includes a lift platform 30 disposed between a rack 2 and an outbound station 8. In the present embodiment, the lift platform 30 includes a lift platform conveyor 32 capable of accommodating two articles W arranged in the conveying direction (Y direction). The lift platform conveyor 32 according to the present embodiment is a roller conveyor having the same structure as the above-described inbound lift platform conveyor 22, and includes a first roller conveyor 34 and a second roller conveyor 36 as illustrated in Figures 3 and 4 to be described later. By such a lift platform conveyor 32, an article W is transferred between the outbound station 8 and an outbound conveyor 38 to be described later.

Note that the outbound lift platform conveyor 32 will be mainly described with respect to Figures 3 and 4 to be described later, but in the present embodiment, since the outbound lift platform conveyor 32 and the inbound lift platform conveyor 22 have the same structure, identical components on the inbound side and the outbound side in Figures 3 and 4 are denoted by the same reference sign for convenience of description. Note that, in the present embodiment, as described later, the outbound lift platform conveyor 32 and the inbound lift platform conveyor 22 are provided such that their orientations are opposite to each other with respect to the conveying direction (Y direction) between the inbound side and the outbound side, thereby functioning as inbound and outbound conveyors, respectively.

Each outbound lift transfer apparatus 12 includes a well-known lift mechanism 42 that moves the lift platform 30 up and down along a support 40 and stops the lift platform 30 at a shelf position of any one of the plurality of shelf levels 14. In each shelf level 14, the outbound conveyor 38 is provided at a portion adjacent to the outbound lift transfer apparatus 12 in the Y direction. Thus, an article W is transferred by operating both the lift platform conveyor 32 and the outbound conveyor 38 in coordination. Note that the outbound conveyor 38 functions as a buffer conveyor for storing an article. The outbound conveyor 38 is, for example, a belt conveyor.

The inbound stations 6 and the outbound stations 8 will be described next.

As illustrated in Figures 1 and 2, the inbound stations 6 are disposed on both sides of the racks 2 (only one side is illustrated in Figure 1). The inbound stations 6 receive, from the inbound conveyor (not illustrated), articles W to be housed in the racks 2. Each inbound station 6 includes a station conveyor 6a.

Similarly to the inbound stations 6, the outbound stations 8 are disposed on both sides of the racks 2 (only one side is illustrated in Figure 1). The outbound stations 8 receive articles W conveyed out of the racks 2. Each outbound station 8 includes a station conveyor 8a.

As illustrated in Figure 2, the plurality of inbound stations 6 and the plurality of outbound stations 8 are disposed such that they are adjacent to each other in the X direction of the automated warehouse 1, and accordingly, the plurality of inbound lift platforms 20 and inbound conveyors 24 and the plurality of outbound lift platforms 30 and outbound conveyors 38 are disposed such that they are adjacent to each other in the X direction in accordance with arrangement of the inbound stations 6 and the outbound stations 8.

The automated warehouse 1 according to the present embodiment also includes a controller 44 connected to the inbound lift transfer apparatuses 10, the outbound lift transfer apparatuses 12, and the like in a wired or wireless manner. In the present embodiment, the controller 44 is a device that individually controls conveying operations of articles by the inbound lift platform conveyors 32 and the outbound lift platform conveyors 32 (the first roller conveyors 34 and the second roller conveyors 36).

Note that the controller 44 is connected to the inbound stations 6, the outbound stations 8, the plurality of vehicles 4, the plurality of inbound conveyors 24, and the plurality of outbound conveyors 38 in addition to the inbound lift transfer apparatus 10 and the outbound lift transfer apparatus 12, and is also a device that manages storage and inbound and outbound operations of articles W and the like in the automated warehouse 1. The controller 44 is constituted by a computer including a processing device (circuit) that is one or more processors (typically a CPU), a memory (such as a ROM or a RAM) that stores various computer programs, and an input-output device.

An example of inbound and outbound operations of articles by the controller 44 will be described below.

For example, in an inbound operation, the lift platform 20 of an inbound lift transfer apparatus 10 moves to the position of the station conveyor 6a of an inbound station 6, and subsequently, in the present example, continuously conveys two articles W from the station conveyor 6a to the inbound lift platform conveyor 22. Subsequently, the lift platform 20 moves up and down to a position corresponding to a shelf level 14 (managed by the controller 44) in which the articles W are to be stored, and continuously conveys the two articles W from the lift platform conveyor 22 to an inbound conveyor 24. Note that only one article W may be conveyed. Subsequently, a vehicle 4 moves up to the inbound conveyor 24 and loads one article W, and then travels in the Y direction and unloads the article W into a target bays 16 of the shelf level 14.

In an outbound operation, a vehicle 4 on a shelf level 14 in which an article W to be retrieved (managed by the controller 44) is stored transfers the article W onto the vehicle 4 at a target bay 16, and then conveys the article W to the outbound conveyor 38. The lift platform 30 of an outbound lift transfer apparatus 12 is moved up and down, and the lift platform 30 is stopped at a position corresponding to the shelf level 14 in which the article W to be retrieved is stored. The outbound conveyor 38 also functions as a buffer conveyor, and in the present example, continuously conveys two articles from the outbound conveyor 38 to a lift platform conveyor 32. Note that only one article W may be conveyed. Subsequently, the lift platform 30 is moved up and down, and two articles W are conveyed to an outbound station conveyor 8a.

The configurations of the lift platform conveyors 32 included in the outbound lift platforms 30 and the inbound lift platforms 20 according to the present embodiment will be described next with reference to Figures 3 and 4. Figure 3 is a side view illustrating schematic configurations of the upstream roller conveyor and the downstream roller conveyor in each lift platform of the lift transfer apparatus according to the present embodiment, and Figure 4 is a plan view illustrating schematic configurations of the upstream roller conveyor and the downstream roller conveyor in each lift platform of the lift transfer apparatus according to the present embodiment.

Note that, in the following description, Figures 3 and 4 illustrate the lift platform conveyor 32 included in each outbound lift platform 30. In the present embodiment, each inbound lift platform conveyor 22 has the same structure as the outbound lift platform conveyor 32, and thus description thereof is omitted.

Note that, in the following description, an "upstream side" and a "downstream side" mean an upstream side and a downstream side in the conveying direction of an article W on a lift platform conveyor 32 (22).

For example, as illustrated in Figures 1 and 2, in an outbound lift platform conveyor 32, a rack 2 and an outbound conveyor 38 are provided on the upstream side, and an outbound station 8 is provided on the downstream side.

An inbound lift platform conveyor 22 is provided in an orientation opposite to arrangement of an outbound lift platform conveyor 32 in the Y direction. Specifically, as understandable from Figure 1 and the above description, in the inbound lift platform conveyor 22, an inbound station 6 is provided on the upstream side, and a rack 2 and an inbound conveyor 24 are provided on the downstream side.

As illustrated in Figures 3 and 4, a conveying direction indicated by an arrow in the drawings is defined in a lift platform conveyor 32 (22), and articles W are conveyed from the upstream side to the downstream side in the conveying direction. In Figure 3, W11, W12, and W13 illustrated with virtual lines each indicate an article having a maximum preset length in the conveying direction among articles that can be stored in the automated warehouse 1, and W21 and W22 each indicate an article having a minimum preset length in the conveying direction among the articles. For convenience of description, W11, W12, and W13 are illustrated as overlapping each other, but in reality, two articles are placed on the lift platform conveyors 32 (22) so as not to collide with each other.

As illustrated in Figures 3 and 4, each lift platform conveyor 32 includes the first roller conveyor on the upstream side (upstream roller conveyor) 34 and the second roller conveyor on the downstream side (downstream roller conveyor) 36.

The first roller conveyor 34 includes an upstream roller (second roller) 50 provided relatively on the upstream side in the first roller conveyor 34, and a downstream roller (first roller) 52 provided relatively on the downstream side in the first roller conveyor 34. In the illustrated example, the upstream roller 50 is constituted by a total of 10 rollers, and the downstream roller 52 is constituted by a total of three rollers.

The second roller conveyor 36 includes an upstream roller (second roller) 54 provided relatively on the upstream side in the second roller conveyor 36, and a downstream roller (first roller) 56 provided relatively on the downstream side in the second roller conveyor 36. In the illustrated example, the upstream roller 54 is constituted by a total of 10 rollers, and the downstream roller 56 is constituted by a total of three rollers.

In the present embodiment, in the first roller conveyor 34 and the second roller conveyor 36, the upstream rollers 50 and 54 are rollers each having a sleeve-shaped resin tube member 58 fitted to the outer peripheral surface of a metal roller, and the downstream rollers 52 and 56 are metal rollers 60.

In the present embodiment, by using such resin tube members 58, the upstream rollers 50 and 54 are configured to have diameters larger than the diameters of the downstream rollers 52 and 56 as the metal rollers 60.

In the present embodiment, the downstream metal rollers 60 (52 and 56) to which resin tube members are not fitted and the upstream metal rollers (50 and 54) to which the resin tube members 58 are fitted are identical metal rollers having the same diameter and made of the same material.

In the present example, PVC tubes 58 having a thickness of approximately 2 mm are used as the resin tube members 58, and accordingly, in each of the first roller conveyor 34 and the second roller conveyor 36, article support surfaces (article support surfaces formed by apexes of the rollers in the sectional view illustrated in Figure 3) of rollers to which the resin tube members 58 are fitted are set to be at positions higher by approximately 2 mm than article support surfaces of the downstream rollers 52 and 56.

As illustrated in Figure 4, the rollers 50, 52, 54, and 56 are each pivotally supported at both end portions by a pair of lift platform frames 62 provided on respective side surfaces of the lift platform conveyor 32 (22) in the width direction.

As illustrated in Figures 3 and 4, the upstream roller 50 of the first roller conveyor 34 and the upstream roller 54 of the second roller conveyor 36 are each provided with a driving roller 64 or 66, each driving roller incorporating a motor (not illustrated). The remaining rollers 50 and 52 in the first roller conveyor 34 are driven rollers belt-connected (not illustrated) to the driving roller 64, and the remaining rollers 54 and 56 in the second roller conveyor 36 are driven rollers belt-connected (not illustrated) to the driving roller 66. Operations of the first roller conveyor 34 and the second roller conveyor 36 (drive operations of rollers for conveying articles W) are individually controlled by the controller 44 based on article detection signals from sensors 70 and 72 (refer to Figures 3 and 4) of the first roller conveyor 34 and article detection signals by sensors 76 and 78 of the second roller conveyor 36, which will be described later.

As illustrated in Figures 3 and 4, the first roller conveyor 34 includes a stop sensor 70 for stopping conveyance of an article (refer to the article W13 in Figure 3) conveyed on the upstream roller 50 and the downstream roller 52, a deceleration sensor 72 provided at a predetermined position on the upstream side thereof and for decreasing the conveying speed of an article conveyed on the upstream roller 50, and an overhang sensor 74 for detecting upstream overhang of an article rear end portion from the first roller conveyor 34.

Similarly, the second roller conveyor 36 includes a stop sensor 76 for stopping conveyance of an article (refer to the article W11 in Figure 3) conveyed on the upstream roller 54 and the downstream roller 56, a deceleration sensor 78 provided at a predetermined position on the upstream side thereof and for decreasing the conveying speed of an article (refer to the article W12 in Figure 3) conveyed on the upstream roller 54, and an overhang sensor 80 for detecting downstream overhang of an article front end portion from the second roller conveyor 36.

These sensors (70 and the like) are photoelectric sensors each including a light source, a photoreceiver, and a reflective plate, and the light source, the photoreceiver, and the reflective plate are attached to the lift platform frames 62 (refer to Figure 4). As illustrated in Figure 4, an optical axis O (illustrated with a dashed and single-dotted line) of each of the sensors (70 and the like) is orthogonal to the conveying direction (Y direction) of the first roller conveyor 34 and the second roller conveyor 36 and extends in the horizontal direction. When light emitted from the light source is blocked by an article W and is not received by the photoreceiver without being reflected by the reflective plate, the controller 44 determines that the article W is detected, and transmits a predetermined signal to the controller 44. In the configuration illustrated in Figures 3 and 4, the stop sensors 70 and 76, the deceleration sensors 72 and 78, and the overhang detection sensor 80 transmit detection signals when a front end portion of a conveyed article W blocks the optical axis O. The overhang detection sensor 74 transmits a detection signal when a rear end portion of a conveyed article W blocks the optical axis O.

The following describes, with reference to Figures 3 and 4, the relation among the position of the deceleration sensor 78 provided in the second roller conveyor 36, a boundary position between the upstream roller 50 and the downstream roller 52 in the first roller conveyor 34, and the length of an "article having a maximum length in the conveying direction". Note that, more precisely, the position of the deceleration sensor 78 is defined by the position of the optical axis O, and the boundary position between the upstream roller 50 and the downstream roller 52 is defined by a middle position between the upstream roller 50 positioned furthest downstream and the downstream roller 52 positioned furthest upstream.

In the present embodiment, as illustrated in Figures 3 and 4, the deceleration sensor 78, the upstream roller 50, and the downstream roller 52 are disposed such that a distance Lr from the position of the deceleration sensor 78 provided in the second roller conveyor 36 to the boundary position between the upstream roller 50 and the downstream roller 52 in the first roller conveyor 34 is greater than a length Lw of an article (refer to W12) having a maximum length in the conveying direction.

An action based on the dimensional relation between the distance Lr and the length Lw will be described below together with operations (article conveying speeds) of the first roller conveyor 34 and the second roller conveyor 36.

In the present embodiment, when a front end portion of the article W12 is detected by the deceleration sensor 78 in the second roller conveyor 36, the controller 44 controls the rotational speed of the driving roller 66 (refer to Figure 3) of the second roller conveyor 36 and decreases the conveying speed of the article from a conveying speed V1 in normal operation to a predetermined conveying speed V2 lower than the conveying speed V1.

At this time, when the upstream first roller conveyor 34 is conveying an article (when an article is not detected by the deceleration sensor 72), the driving roller 64 and the other driven rollers 50 and 52 are driven at a rotational speed for obtaining the conveying speed V1 in normal operation.

Note that, in the second roller conveyor 36, the upstream roller 54 provided with the resin tube member 58 having a high frictional force mainly conveys an article (W12).

In such a case, the distance Lr is greater than the maximum article length Lw, and accordingly, at article detection by the deceleration sensor 78, a rear end portion of the article (W12) on the second roller conveyor 36 can be positioned on the downstream roller 52, which is a metal roller of the first roller conveyor 34, and can be prevented from being positioned on the upstream roller 50.

As described above, the downstream roller 52 has a diameter smaller than the diameter of the upstream roller 50, and also has a smaller frictional force for an article since no resin tube member is provided.

Accordingly, even when the conveying speed V2 on the second roller conveyor 36 is lower than the conveying speed V1 on the first roller conveyor 34 and the rear end portion of the article (W12) rests on the first roller conveyor 34, the rear end portion of the article (W12) rests on the downstream roller 52 having a small diameter and a small frictional force, and thus the downstream roller 52 can be suppressed from strongly driving the rear end portion of the article W12 and disturbing behavior of the article or from pushing the article (W12) from behind. Therefore, the controller 44 can individually control the driving rollers 64 and 66 so that deceleration of the article (W12) on the downstream side and conveyance of the article on the upstream side in normal operation are both achieved.

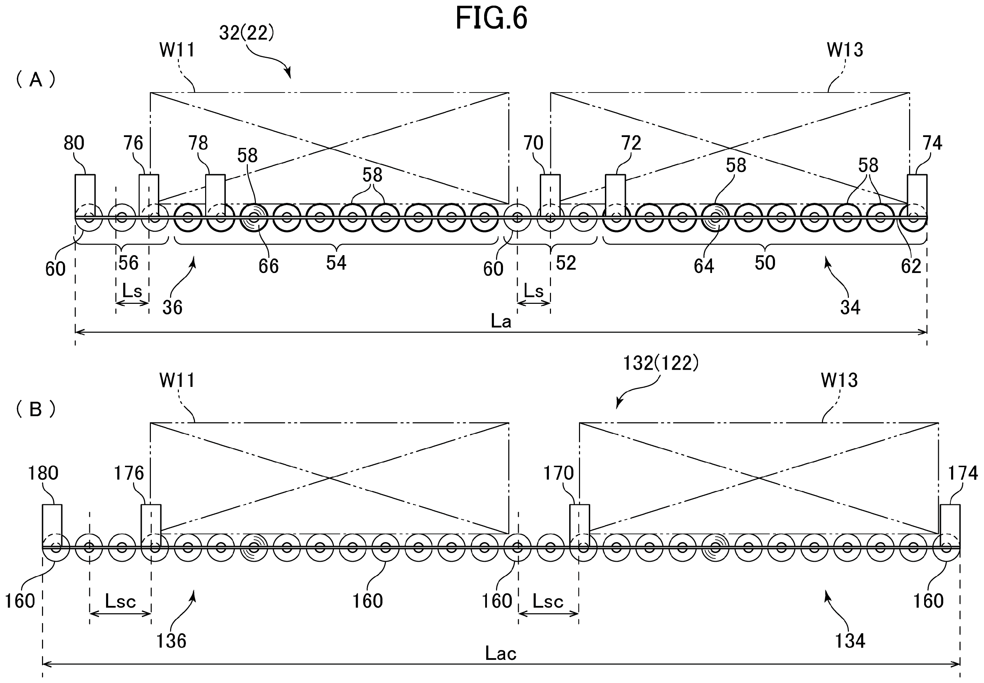

When a front end portion of an article conveyed at the conveying speed V2 is detected by the stop sensor 76 (refer to the article W11), the controller 44 stops rotational drive of the driving roller 66. After rotational drive of the driving roller 66 is stopped, the article W11 moves slightly downstream due to inertial force (inertia) and then stops. The automated warehouse 1 according to the present embodiment is designed based on assumed sizes and weights of articles such that an article moved by inertia stops on the upstream side of the overhang sensor 80. Note that, as illustrated in (A) of Figure 6 to be described later, a distance Ls that allows a movement amount due to inertia is set in the lift platform conveyor 32 (22).

In the present embodiment, the overhang detection sensor 80 is provided on an assumption that, in a worst case, an article overhangs from the lift platform conveyor 32 (22). When an article is detected by the overhang detection sensor 80, the controller 44 temporarily stops operation of the automated warehouse 1.

The above-described control of the article conveying speed by using the deceleration sensor 78 and the stop sensor 76 in the second roller conveyor 36 is the same for the first roller conveyor 34, and thus description thereof is omitted.

Modifications of the present embodiment will be described next.

The thickness of each above-described resin tube member 58 is not limited to 2 mm and may be, for example, 1 to 3 mm. The resin includes plastic and rubber, and is not limited to the above-described PVC material and may be any material that increases a frictional force.

The diameters of the upstream rollers 50 and 54 may be larger than the diameters of the downstream rollers 52 and 56 such that the above-described difference in article support surface height (in the above-described example, 2 mm) is obtained between the upstream rollers 50 and 54 and the downstream rollers 52 and 56. In this case, for example, the diameters of the upstream rollers may be larger than the diameters of the downstream rollers by 4 to 6 mm. In this case, all rollers of the upstream rollers 50 and 54 and the downstream rollers 52 and 56 may be made of the same material (for example, metal).

Either the upstream rollers 50 and 54 or the downstream rollers 52 and 56 may be provided with predetermined surface processing or applied with a film material such that the upstream rollers 50 and 54 and the downstream rollers 52 and 56 have the same diameter and surface frictional force of the upstream rollers 50 and 54 is greater than surface frictional force of the downstream rollers 52 and 56. The surface processing can be adjusted by, for example, an average surface roughness such that the average roughness is decreased to decrease the frictional force, and the average roughness is increased to increase the frictional force. The film material may be formed by applying a material (such as a silicon containing material) that decreases the frictional force or by applying a material (resin material containing rubber or the like) that increases the frictional force.

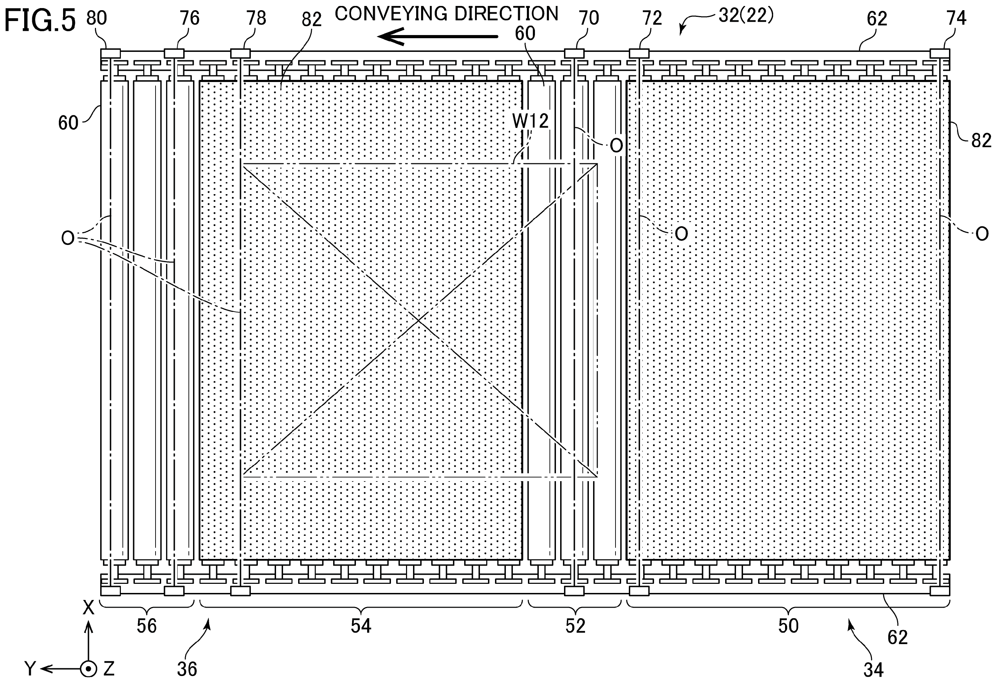

In another modification, as illustrated in Figure 5, an endless belt 82 may be wound around the upstream roller 50 of the first roller conveyor 34 and the upstream roller 54 of the second roller conveyor 36 to substantially increase (apparent) diameters of the rollers and increase frictional force. In this case, the upstream rollers 50 and 54 are metal rollers, the above-described resin tube members 58 are not provided, and the endless belt 82 is wound around the furthest upstream roller and the furthest downstream roller. The material of the endless belt 82 may be a material used for a well-known conveying conveyor.

Effects provided to the structure of each lift platform conveyors 32 (22) according to the present embodiment and modifications will be described next with reference to Figure 6. Figure 6 is a diagram for description of effects of a lift platform in the lift transfer apparatus according to the present embodiment: (A) of Figure 6 is a side view illustrating a schematic configuration of a lift platform in the lift transfer apparatus according to the present embodiment; and (B) of Figure 6 is a side view illustrating a schematic configuration of a lift platform according to a conventional technology of a comparative example.

As illustrated in (A) of Figure 6, in the present embodiment, the overall length (also referred to as a conveyor length) of each lift platform conveyor 32 (22) is a predetermined length La. The length La depends on above-described article movement amount due to inertia. In each lift platform conveyor 32 (2) according to the present embodiment, the distance Ls that allows the movement amount due to inertia is set as illustrated in (A) of Figure 6. In other words, an allowance length for allowing movement due to inertia is set on the downstream side of the deceleration sensor 78.

In the present embodiment, as described above, the resin tube members 58 are fitted to the upstream rollers 50 and 54 to increase their diameters and frictional forces, and moreover, article deceleration control is performed in advance by using the deceleration sensor 72, and thus the article movement amount (allowable amount) Ls due to inertia can be suppressed.

On the other hand, (B) of Figure 6 illustrates a lift platform conveyor 132 (122) according to the conventional technology, including a first roller conveyor 134 and a second roller conveyor 136. In the roller conveyors 134 and 136, rollers are metal rollers 160 having the same diameter, no deceleration sensor is provided, article deceleration and stop are controlled by stop sensors 170 and 176, and conveying operations by the first roller conveyor 134 and the second roller conveyor 136 are individually controlled. Note that overhang detection sensors 174 and 180 for detecting article overhang from the lift platform conveyor 132 (122) have been conventionally provided.

As understandable from comparison between (A) of Figure 6 and (B) of Figure 6, in the conventional lift platform conveyor 132 (122), an article movement amount (allowable amount) Lsc due to inertia is larger than the movement amount (allowable amount) Ls according to the present embodiment, and accordingly, an overall length (conveyor length) Lac of the lift platform conveyor 132 (122) is larger than the overall length La according to the present embodiment. In other words, in the present embodiment, since the frictional force of the upstream rollers 50 and 54 is increased and article deceleration control is performed by the deceleration sensor 72 as described above, the article movement amount (allowable amount) Ls due to inertia can be suppressed, and accordingly, the overall length La of the lift platform conveyor 32 (22) can be shortened as compared to that of a conveyor in the conventional technology. Moreover, a lifting weight of the lift platform conveyor 32 (22) can be reduced by an amount corresponding to the shortening.

In the present embodiment, since the distance Lr is set to be greater than the article maximum length Lw as described above (refer to Figures 3 and 4), the first roller conveyor 34 can be kept at the conveying speed in normal operation even when the article (W12) having the maximum length starts to decelerate in the second roller conveyor 36, and accordingly, the lift platform conveyor 32 (22) can more reliably convey two articles, and the first roller conveyor 34 and the second roller conveyor 36 can be individually speed-controlled.

Effects of the automated warehouse 1 according to the embodiment and modifications of the present invention will be described next.

The automated warehouse 1 according to the present embodiment and modifications includes a rack 2 having a plurality of shelf levels 14, transport vehicles 4 each configured to move along one of the shelf levels in the rack 2, and a lift transfer apparatus 10 or 12 for transferring an article W to and from each shelf level 14, the lift transfer apparatus 10 or 12 includes a lift platform 20 or 30 configured to move up and down, the lift platform 20 or 30 includes a first roller conveyor (upstream roller conveyor) 34 disposed on an upstream side in a conveying direction of the article and a second roller conveyor (downstream roller conveyor) 36 disposed on a downstream side in the conveying direction of the article, and is capable of accommodating two articles (for example, W11, W13) on the first roller conveyor and the second roller conveyor, the first roller conveyor 34 includes a first roller (downstream roller) 52, the second roller conveyor 36 includes a second roller (upstream roller) 54 having a diameter larger than the diameter of the first roller or having a frictional force larger than the frictional force of the first roller, the first roller 52 is disposed at least on the downstream side of the first roller conveyor 34, and the second roller 54 is disposed at least on the upstream side of the second roller conveyor 36.

According to the present embodiment and modifications thus configured, even when a rear end portion of an article (for example, W12) conveyed to the second roller conveyor 36 rests on the first roller 52 (disposed on the downstream side of the first roller conveyor 34) of the first roller conveyor 34, the second roller conveyor 36 does not interfere with the article since the first roller 52 has a relatively small diameter or a relatively small frictional force, and the article can be reliably positioned since the second roller 54 of the second roller conveyor 36 has a relatively large diameter or a relatively large frictional force (for example, deceleration-stop control is possible by the second roller 54). Thus, due to an action of the first roller 52 of the first roller conveyor 34 and an action of the second roller 54 of the second roller conveyor 36, a predetermined allowance length (allowance length corresponding to article flow) (for example, Ls) that is conventionally set in the article conveying direction can be minimized. As a result, the overall length of the lift platform conveyors 22 and 32 that conveys two articles on the lift platform 20 or 30 can be shortened. In addition, the weight of the lift platform 20 or 30 can be reduced by an amount corresponding to the shortening of the overall length.

In the present embodiment and modifications, the first roller conveyor 34 and the second roller conveyor 36 each include the first roller 52 or 56 and the second roller 50 or 54 having a diameter larger than the diameter of the first roller or having a frictional force larger than the frictional force of the first roller, and the first roller conveyor 34 and the second roller conveyor 36 each have the first roller 52 or 56 disposed on the downstream side and the second roller 50 or 54 disposed on the upstream side.

According to the present embodiment and modifications thus configured, influence of an article conveyed into the lift platform 20 or 30 or an article conveyed out of the lift platform 20 or 30, on inbound and outbound transfer operation can be minimized.

In the present embodiment and modifications, the first roller conveyor 34 and the second roller conveyor 36 each include a deceleration sensor 72 or 78 for decreasing the conveying speed of an article conveyed by the first roller conveyor 34 and the second roller conveyor 36, and a stop sensor 70 or 76 for stopping the article having the conveying speed decreased.

According to the present embodiment and modifications thus configured, in addition to an action of the first roller 52 of the first roller conveyor 34 and an action of the second roller 54 of the second roller conveyor 36, deceleration-stop control of an article by the deceleration sensor 72 or 78 and the stop sensor 70 or 76 can be performed to reliably position the article, and accordingly, a predetermined allowance length (allowance length corresponding to article flow) that is conventionally set in the article conveying direction can be more reliably minimized.

In the present embodiment and modifications, the second roller conveyor 36 includes at least a deceleration sensor 78 for decelerating an article conveyed by the second roller conveyor 36, and the position of the deceleration sensor 78 and arrangement of the first roller 52 and the second roller 50 are set such that, in a side view, a distance Lr from a position at which the deceleration sensor 78 is provided in the second roller conveyor 36 to a boundary position between the first roller 52 and the second roller 50 in the first roller conveyor 34 is greater than a preset maximum length Lw of an article in the conveying direction.

According to the present embodiment and modifications thus configured, since the maximum length Lw of a conveyed article is less than the distance from the position of the deceleration sensor 78 of the second roller conveyor 36 to the boundary position between the first roller 52 and the second roller 50 of the first roller conveyor 34, a rear end portion of the article conveyed by the second roller conveyor 36 when starting to be decelerated by the deceleration sensor 78 rests on the first roller 52 having a relatively small diameter or a relatively small frictional force in the first roller conveyor 34, so that interference of the first roller conveyor 34 with the article (for example, W12) can be suppressed. Thus, deceleration-stop control of the article by the deceleration sensor 78 can be performed more precisely and more reliably in the second roller conveyor 36.

In the present embodiment and modifications, the lift transfer apparatus includes an inbound lift transfer apparatus 10 for transferring an article to each shelf level 14 of the rack 2, and an outbound lift transfer apparatus 12 for transferring an article from each shelf level 14 of the rack 2; in the inbound lift transfer apparatus 10, the first roller conveyor 34 is disposed on a side farther from the rack 2, and the second roller conveyor 36 is disposed on a side closer to the rack 2; in the outbound lift transfer apparatus 12, the first roller conveyor 34 is disposed on a side closer to the rack 2, and the second roller conveyor 36 is disposed on a side farther from the rack 2; and in the inbound lift transfer apparatus 10 and the outbound lift transfer apparatus 12, the first roller conveyor 34 and the second roller conveyor 36 each have the first roller 52 or 56 disposed on the downstream side and the second roller 50 or 54 disposed on the upstream side.

According to the present embodiment and modifications thus configured, the lift transfer apparatus 10 or 12 having the same structure can be used for both inbound and outbound. For example, roller conveyor assembles having the same structure and constituting the upstream or downstream roller conveyor 34 or 36 can be used as the first roller conveyor 34 and the second roller conveyor 36 as appropriate.

### Reference Signs List

1 automated warehouse
2 rack
4 transport vehicle
6 inbound station
8 outbound station
10 inbound lift transfer apparatus
12 outbound lift transfer apparatus
14 shelf level
20 inbound lift platform
22 inbound lift platform conveyor
24 inbound conveyor
28 inbound lift mechanism
30 outbound lift platform
32 outbound lift platform conveyor
34 first roller conveyor (first roller conveyor)
36 second roller conveyor (second roller conveyor)
38 outbound conveyor
42 outbound lift mechanism
44 controller
50 upstream roller (second roller)
52 downstream roller (first roller)
54 upstream roller (second roller)
56 downstream roller (first roller)
58 PVC tube (tube member)
60 metal roller
62 lift platform frame
64, 66 driving roller
70, 76 stop sensor
72, 78 deceleration sensor
74, 80 overhang detection sensor
82 endless belt
W article
W11, W12, W13 article (article having a maximum length)
W21, W22 article (article having a minimum length)
Lw article maximum length
Lr distance from deceleration sensor to boundary position between first roller and second roller
La conveyor length (lift platform overall length)
Ls allowance length (allowance length corresponding to article flow due to inertia)
Lac conveyor length (lift platform overall length) (conventional technology)
Lsc allowance length (allowance length corresponding to article flow due to inertia) (conventional technology)
O optical axis of photoelectric sensor

## Claims

1. An automated warehouse comprising:
a rack having a plurality of shelf levels;
transport vehicles each configured to move along one of the shelf levels in the rack; and
a lift transfer apparatus for transferring an article to and from each shelf level, wherein
the lift transfer apparatus includes a lift platform configured to move up and down,
the lift platform includes an upstream roller conveyor disposed on an upstream side in a conveying direction of the article and a downstream roller conveyor disposed on a downstream side in the conveying direction of the article, and is capable of accommodating two articles on the lift platform,
the upstream roller conveyor includes a first roller, and the downstream roller conveyor includes a second roller having a diameter larger than the diameter of the first roller or having a frictional force larger than the frictional force of the first roller,
the first roller is disposed at least on the downstream side of the upstream roller conveyor, and
the second roller is disposed at least on the upstream side of the downstream roller conveyor.

2. The automated warehouse according to claim 1, wherein
the upstream roller conveyor and the downstream roller conveyor each include the first roller and the second roller having a diameter larger than the diameter of the first roller or having a frictional force larger than the frictional force of the first roller, and
the upstream roller conveyor and the downstream roller conveyor each have the first roller disposed on the downstream side and the second roller disposed on the upstream side.

3. The automated warehouse according to claim 1 or 2, wherein the upstream roller conveyor and the downstream roller conveyor each include a deceleration sensor for decreasing a conveying speed of an article conveyed by the upstream roller conveyor and the downstream roller conveyor, and a stop sensor for stopping the article having the conveying speed decreased.

4. The automated warehouse according to claim 2, wherein
the downstream roller conveyor includes at least a deceleration sensor for decelerating an article conveyed by the downstream roller conveyor, and
the position of the deceleration sensor and arrangement of the first roller and the second roller are set such that, in a side view, a distance from a position at which the deceleration sensor is provided in the downstream roller conveyor to a boundary position between the first roller and the second roller in the upstream roller conveyor is greater than a preset maximum length of an article in the conveying direction.

5. The automated warehouse according to claim 2 or 4, wherein
the lift transfer apparatus includes an inbound lift transfer apparatus for transferring an article to each shelf level of the rack, and an outbound lift transfer apparatus for transferring an article from each shelf level of the rack,
in the inbound lift transfer apparatus, the upstream roller conveyor is disposed on a side farther from the rack, and the downstream roller conveyor is disposed on a side closer to the rack,
in the outbound lift transfer apparatus, the upstream roller conveyor is disposed on a side closer to the rack, and the downstream roller conveyor is disposed on a side farther from the rack, and
in the inbound lift transfer apparatus and the outbound lift transfer apparatus, the upstream roller conveyor and the downstream roller conveyor each have the first roller disposed on the downstream side and the second roller disposed on the upstream side.
